# EUROPEAN PATENT APPLICATION

(11) **EP 4 656 620 A1**
(43) Date of publication of application: **03.12.2025**
(21) Application number: 25174788.7
(22) Date of filing: 07.05.2025
(51) Int. Cl.: C04B 41/00, C04B 41/50, C04B 41/53, C04B 41/87, C04B 41/91

(54) **COMPONENTS HAVING ENVIRONMENTAL BARRIER COATINGS AND METHODS FOR FORMING THE SAME**

(30) Priority: 28.05.2024 US 202418675454
(71) Applicant: Honeywell International Inc., Charlotte, NC 28202 (US)
(72) Inventor: BLINN, Kevin, Charlotte, 28202 (US); MEHR, Mehrad, Charlotte, 28202 (US)
(74) Representative: Ingrassia, Fisher & Lorenz UK Ltd.

(57) **Abstract**

Components and methods for forming the components are provided that promote adherence of environmental barrier coatings to surfaces of the components. The components include a substrate formed of a SiC-SiC composite that includes boron, a surface of the substrate that has a concentration of the boron that is reduced relative to a remainder of the substrate, and an environmental barrier coating disposed on the surface of the substrate. The methods include providing the SiC-SiC composite, performing a pretreatment process on a portion of the surface of the component to reduce the concentration of the boron at the surface, and forming the environmental barrier coating on the surface.

## Description

### TECHNICAL FIELD

The present invention generally relates to ceramic composite components (CMCs) having environmental barrier coatings (EBCs) thereon, and more particularly relates to methods and components formed thereby that include CMCs with EBCs disposed on surfaces thereof having reduced boron concentrations.

### BACKGROUND

Certain high temperature engine components, such as those having a substrate comprising a ceramic matrix composite (CMC), often include an environmental barrier coating (EBC) to protect the underlying CMC. In some examples boron may be included in the CMC as a coating for reinforcement fibers therein (e.g., boron nitride) to promote environmental protection of the fibers, and/or added as a dopant to a matrix material of the CMC to promote oxidation resistance. However, during use of the components at high temperatures, the boron may be leached from the CMC over time and form a layer of borosilicate glass at the interface between the CMC and the EBC. This layer of borosilicate glass may be susceptible to damage, for example, by steam at high temperatures and eventually may cause delamination of the EBC from the CMC.

Hence, there is a need for systems and methods that are capable of reducing the likelihood of delamination of an EBC from a CMC that includes boron. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various examples, a method is provided for producing a component. The method may include providing a component that includes a surface formed of a SiC-SiC composite that includes boron, performing a pretreatment process on a portion of the surface of the component to reduce a concentration of the boron at the surface, and forming an environmental barrier coating on the surface.

In various examples, a component is provided that may include a substrate formed of a SiC-SiC composite that includes boron, a surface of the substrate that has a concentration of the boron that is reduced relative to a remainder of the substrate, and an environmental barrier coating disposed on the surface of the substrate.

Furthermore, other desirable features and characteristics of the method and component will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a flowchart illustrating an exemplary method for producing a component having an environmental barrier coating on a CMC substrate in accordance with an embodiment; and
FIGS. 2-6 represent stages of producing a component having an environmental barrier coating on a CMC substrate in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration."

Systems and methods disclosed herein provide for producing components having an environmental barrier coating (EBC) on a ceramic matrix composite (CMC) substrate. The EBC may be disposed on a surface of the CMC substrate that has a reduced concentration of boron relative to other portions of the CMC substrate. The systems and methods may be used and/or performed on various components that include EBCs, including but not limited to turbine engine components (e.g., a shroud). In various embodiments, the components include substrates that include or are formed of a SiC-SiC matrix composite. In various embodiments, the EBCs of the components include at least one layer comprising a rare-earth silicate, such as but not limited to ytterbium monosilicate (YbMS, Yb₂SiO₅) and/or ytterbium disilicate (YbDS, Yb₂Si₂O₇).

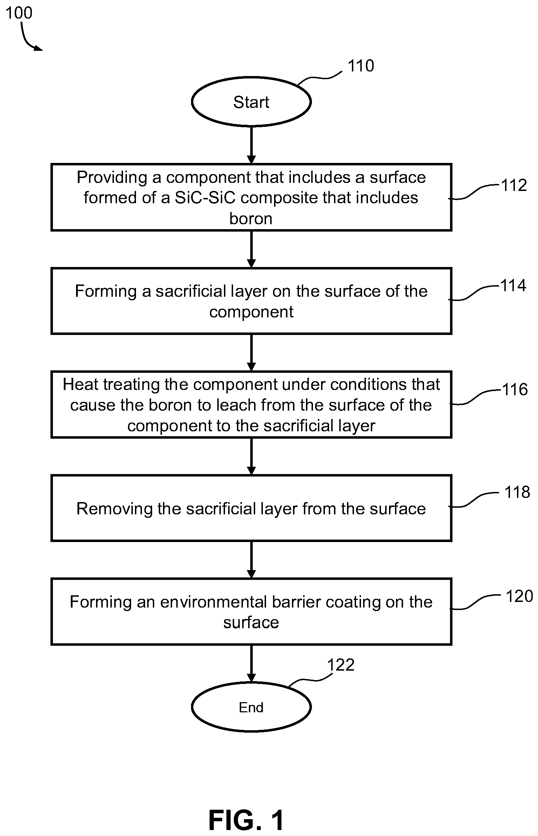

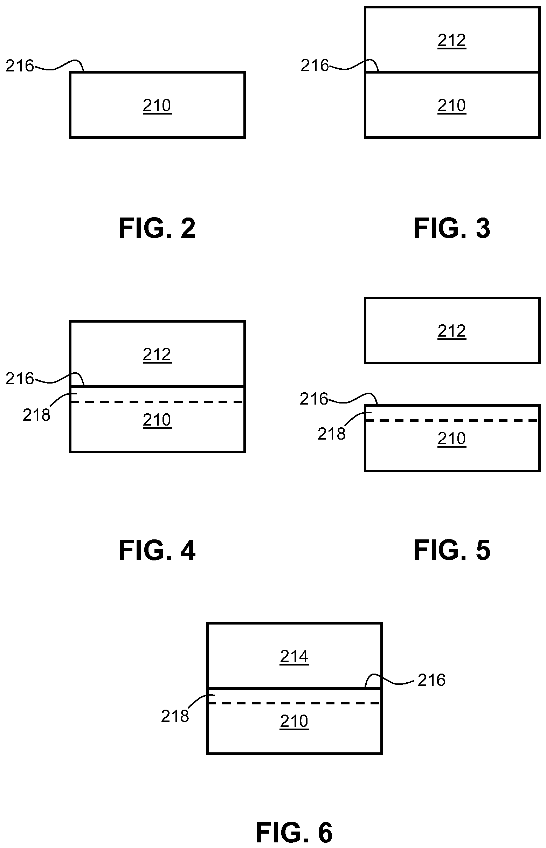

Referring initially to FIG. 1, a flowchart is provided illustrating an exemplary method 100 for producing a component having an EBC on a surface thereof. The method 100 may start at 110. For convenience, certain aspects of the method 100 will be discussed in reference to FIGS. 2-6. However, the method 100 is not limited to the examples represented in FIGS. 2-6.

At 112, the method 100 includes providing a component having a substrate that includes or is formed of a CMC that includes boron, such as a substrate 210 presented in FIG. 2. In some examples, the CMC is a SiC-SiC composite that includes silicon carbide (SiC) fibers embedded within a SiC matrix material. In some examples, an entirety of the component may be formed of the substrate 210. In other examples, the substrate 210 may be disposed on or assembled to another portion of the component that is formed of or includes another material. In some examples, the SiC-SiC composite may include a boron nitride coating on the SiC fibers therein to promote, for example, environmental resistance of the SiC fibers. In some examples, the SiC-SiC composite may include boron as a dopant in the SiC matrix material thereof. Methods of fabricating the substrate 210 are well known in the art and therefore will not be discussed herein.

Prior to forming an EBC on the substrate 210, the method 100 may include performing a pretreatment process on a portion of the surface 216 of the component to reduce a concentration of the boron at and/or adjacent to the surface 216. For example, at 114, the method 100 may include forming a sacrificial layer on a surface of the substrate. For example, FIG. 3 presents a sacrificial layer 212 disposed on a surface 216 of the substrate 200. The sacrificial layer 212 may be formed of or include a material configured to promote leeching of free boron from the substrate 210. In some examples, the sacrificial layer 212 may be formed of or include a material used in EBCs. In some examples, the sacrificial layer 212 may be formed of or include one or more refractory ceramic materials, such as ytterbium disilicate (YbDS).

The sacrificial layer 212 may be formed on the surface 216 of the substrate 210 by various methods. In some examples, the sacrificial layer 212 may be formed by depositing a slurry or a paste onto the surface 216 of the substrate 210. In some examples, the slurry or the paste may be applied to the surface 216 of the substrate 210 by mechanical application (e.g., brushing), immersing the substrate 210 in a reservoir of the slurry or paste, pouring the slurry or paste onto the substrate 210, or flowing the slurry or paste over the substrate 210. The slurry or paste may include a mixture of solids suspended in a carrier fluid (e.g., water). The solids may include, but are not limited to, particulates of a material intended to promote leeching of free boron from the substrate 210 upon heating of the material.

At 116, the method 100 may include heat treating the substrate 210 under conditions that cause free boron to leach from the surface 216 of the substrate 210 to the sacrificial layer 212. For example, FIG. 4 presents the substrate 210, subsequent to the heat treatment, as having a region 218 adjacent to the interface of the substrate 210 and the sacrificial layer 212 having a reduced concentration of boron relative to a remainder of the substrate 210. The heat treatment may include various temperatures, durations, humidities, pressures, and other parameters. Such parameters may be dependent on the composition of the sacrificial layer 212 and/or the composition of the substrate 210. Notably, the heat treatment may not necessarily deplete the surface 216 of the substrate 210 and/or the region 218 adjacent thereto of boron, rather the heat treatment may reduce the concentration of free boron that is capable of being leached during use of the component under normal operating conditions. As such, the surface 216 and/or the region 218 adjacent thereto may maintain certain beneficial properties due to the presence of boron (e.g., environmental and/or oxidation resistance).

In some examples, the heat treatment may be performed at temperatures above an intended operating temperature of the component, such as about 100 to about 300 degrees above the intended operating temperature of the component. For example, various aerospace applications include components formed of a SiC-SiC composite with an EBC formed thereon that includes ytterbium disilicate (YbDS). Such components may be configured to operate at temperatures of about 1200 degrees C for extended periods of time. If the method 100 is to be used to produce such components, then the heat treatment may be performed at equal to or greater than 1300 degrees C for a period of time of about ten hours or more under dry conditions. Regardless of the parameters used, the heat treatment may be performed in a manner that reduces the concentration of boron at the surface 216 of the substrate 210 and/or the region 218 adjacent to the surface of the substrate 210 to a minimum predetermined concentration.

In some examples, the predetermined concentration may be sufficient to significantly reduce the rate of diffusion for the boron during use of the component under the intended operating conditions. In some examples, the rate of diffusion of the boron may be sufficiently low so as to significantly reduce a likelihood of forming a borosilicate glass at an interface of the surface 216 and the EBC during use of the component under the intended operating conditions.

In some examples, the concentration of the boron in at the surface 216 of the substrate 210 and/or the region 218 adjacent to the surface 216 of the substrate 210 is sufficiently low such that the component may be used under the intended operating conditions for an extended period of time (e.g., greater than 100 hours, greater than 1000 hours, or greater than 10,000 hours) without forming a continuous layer of borosilicate glass between the surface 216 and the EBC that is sufficient to cause delamination.

In some examples, the concentration of boron may be reduced within the region 216 of the substrate 210 extending from the surface 216 thereof to a depth of equal to or greater than about 50 micrometers, such as equal to or greater than about 75 micrometers, such as equal to or greater than 100 micrometers. In some examples, the reduction in boron within the substrate 210 due to the heat treatment is substantially uniform across the surface 216, for example, to within a range of about 5 wt.%.

During the heat treatment, a layer of borosilicate glass does not form between the surface of the substrate 210 and the sacrificial layer 212. In general, borosilicate formation is enhanced by wet oxidation or operation conditions when water is present due to the presence of intermediate silicon containing gaseous species. Therefore, borosilicate glass is unlikely to form in the dry conditions of the heat treatment. Even if some borosilicate lass was to form, such glass would be attracted to and incorporated into the sacrificial layer 212 due to the low density of the sacrificial layer 212 (e.g., about 50% packing ceramic grains).

At 118, the method 100 may include removing the sacrificial layer 212 from the surface 216 of the substrate 210. For example, FIG. 5 presents the sacrificial layer 212 as being separated from the surface 216 of the substrate 210. Various methods may be used to remove the sacrificial layer 212 from the surface 216 subsequent to the heat treatment. In some examples, the sacrificial layer 212 may be mechanically removed from the surface 216 of the substrate 210. In some examples, the sacrificial layer 212 at least partially delaminates from the surface 216 of the substrate 210 during or subsequent to the heat treatment due to the increase in boron in the sacrificial layer 212. In some examples, the sacrificial layer 212 may be rapidly cooled to promote delamination. In some examples, one or more methods may be used to remove the sacrificial layer 212 such as, but not limited to, sand blasting, abrasives, grinding, chemical wet etching, reactive ion etching, etc.

Once the sacrificial layer 212 has been removed, the surface 216 of the substrate 210 may be cleaned by various methods such as brushing, sand blasting, or other abrasive cleaning methods such as sonicating.

At 120, the method 100 may include forming the EBC on the surface 216 of the substrate 210. For example, FIG. 6 presents the substrate 210 as having an EBC 214 formed on the surface 216 thereof. Various methods may be used to fabricate the EBC 214 and any underlying layers, if present, between the EBC 214 and the substrate 210. In various embodiments, the EBC 214 may be fabricated via a direct sintering process that includes, for example, applying an EBC slurry to the substrate 210 or underlying layers and then heating the EBC slurry to coalesce powder material within the EBC slurry to form a solid or porous layer (without liquefaction) that defines the EBC 214. The EBC 214 may include various numbers of layers having various compositions.

The method 100 may end at 122.

The methods disclosed herein, including the method 100, provide for producing components suitable for use in high temperature environments. The components may have a substrate formed of a CMC, such as a SiC-SiC composite, that includes boron. A surface of the substrate and/or a region adjacent to the surface of the substrate may have a concentration of the boron that is reduced relative to a remainder of the substrate. An EBC may be disposed on the surface of the substrate. In some examples, the EBC may include or be formed of ytterbium disilicate (YbDS) and the component may be configured for use under operating conditions that include temperatures up to 1200 degrees C for 100 hours or more without forming a continuous layer of borosilicate glass between the surface and the EBC.

The systems and methods disclosed herein provide various benefits over certain existing systems and methods. For example, providing a reduced concentration of free boron at or adjacent to the interface between the substrate and the EBC significantly reduces or eliminates the formation of a layer of borosilicate glass during use of the components at high temperatures, and thereby significantly reduces the likelihood of delamination occurring.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method, comprising:
providing a component that includes a surface formed of a SiC-SiC composite that includes boron;
performing a pretreatment process on a portion of the surface of the component to reduce a concentration of the boron at the surface; and
forming an environmental barrier coating on the surface.

2. The method of claim 1, wherein the pretreatment process includes:
forming a sacrificial layer on the surface of the component;
heat treating the component under conditions that cause the boron to leach from the surface of the component to the sacrificial layer, wherein heat treating the component is performed at temperatures of at least 100 degrees above an operating temperature of the component; and
removing the sacrificial layer from the surface.

3. The method of claim 2, wherein the sacrificial layer includes refractory ceramic material.

4. The method of claim 3, wherein the sacrificial layer includes ytterbium disilicate (YbDS).

5. The method of claim 4, wherein the environmental barrier coating includes ytterbium disilicate (YbDS) and the heat treating is performed at temperatures of equal to or greater than 1300 degrees C.

6. The method of claim 1, wherein the concentration of the boron in the surface is reduced to an extent sufficient to avoid formation of a continuous layer of borosilicate glass at an interface of the surface and the environmental barrier coating during use of the component under operating conditions thereof.

7. The method of claim 6, wherein the environmental barrier coating includes ytterbium disilicate (YbDS) and the operating conditions include temperatures up to 1200 degrees C for 1000 hours.

8. The method of claim 1, wherein the concentration of the boron is reduced in a region of the SiC-SiC composite extending from the surface thereof to a depth of at least 50 micrometers, wherein the reduction in the boron is uniform across the surface of the SiC-SiC composite to within a range of 5 wt.%.

9. A component, comprising:
a substrate formed of a SiC-SiC composite that includes boron;
a surface of the substrate that has a concentration of the boron that is reduced relative to a remainder of the substrate; and
an environmental barrier coating disposed on the surface of the substrate.

10. The component of claim 9, wherein the component is formed from a method comprising:
forming a sacrificial layer on the surface of the component;
heat treating the component under conditions that cause the boron to leach from the surface of the component to the sacrificial layer, wherein heat treating the component is performed at temperatures of at least 100 degrees above an operating temperature of the component;
removing the sacrificial layer from the surface; and
forming the environmental barrier coating on the surface.

11. The component of claim 10, wherein the sacrificial layer includes refractory ceramic material.

12. The component of claim 11, wherein the sacrificial layer includes ytterbium disilicate (YbDS).

13. The component of claim 12, wherein the environmental barrier coating includes ytterbium disilicate (YbDS) and the heat treating is performed at equal to or greater than 1300 degrees C.

14. The component of claim 9, wherein the concentration of the boron in the surface is reduced to an extent sufficient to avoid formation of a continuous layer of borosilicate glass at an interface of the surface and the environmental barrier coating during use of the component under operating conditions thereof, wherein the environmental barrier coating includes ytterbium disilicate (YbDS) and the operating conditions include temperatures up to 1200 degrees C for 1000 hours.

15. The component of claim 9, wherein the concentration of the boron is reduced in a region of the substrate extending from the surface thereof to a depth of at least 50 micrometers, wherein the reduction in the boron is uniform across the surface of the substrate to within a range of 5 wt.%.
